# EUROPEAN PATENT SPECIFICATION

(11) **EP 0 550 573 B1**
(45) Date of publication and mention of the grant of the patent: **16.08.1995**
(21) Application number: 91917240.3
(22) Date of filing: 27.09.1991
(51) Int. Cl.: F16B 5/06

(54) **FLAME RESISTANT WALL PANEL CONNECTIONS**
FEUERFESTE VERBINDUNGEN FÜR WANDPLATTE
ACCOUPLEMENTS DE PANNEAUX DE PAROI RESISTANTS AUX FLAMMES

(30) Priority: 27.09.1990 GB 9021010
(43) Date of publication of application: 14.07.1993
(73) Proprietor: L R Insulations Limited, Andover, Hampshire SP10 3LF (GB)
(72) Inventor: JOLLY, Colin, Kenneth 8 Glenwood Avenue Bassett, Hampshire SO2 3QA (GB)
(74) Representative: Harland, Linda Jane
(86) International application number: GB9101673
(87) International publication number: WO9206307

(56) References cited:
- DE-B- 1 025 493
- GB-A- 797 450
- US-A- 1 439 499
- US-A- 3 594 028
- US-A- 4 497 148

## Description

This invention relates to a panel system comprising a plurality of panel members each of which comprises a panel body disposed between and secured to a pair of planar facing members, and means for securing adjacent panel members together edge-to-edge, each of the facing members being shaped so as to define a trough extending along at least one edge portion of the panel body and opening towards the face of the panel body to which the facing member is secured; and the means for securing the panel members including first and second channel members each having a pair of arms joined by means of a web, the arms of each channel member, in use, engaging one in each of the troughs formed along the adjacent edge portions of a pair of neighbouring panel members. The system is particularly suitable for the connection of soft-cored, sandwich-construction, fire-resistant insulation panels. Such panel systems are described, for example, in US Patent 3544028. German Patent document DE-B-1 025 493 discloses similar panel systems with different fastening means.

The panel system of the invention is characterised in that the troughs extend along confronting edges of the panel members and in that the means for securing adjacent panel members together further comprises fastening means engageable with the first and second channel members to fasten them together, the fastening means extending in between neighbouring panel members to fasten together the channel members on opposite sides thereof.

The connection has been designed to achieve the following aims with the fewest separate components:
a) maintenance of a virtually flush surface,
b) a clamping action to assist in holding the panel faces in position both laterally and transversely under all conditions, but most particularly during a fire, and
c) minimal cold-bridging.

An embodiment of the invention will now be described in detail, by way of example, with reference to the drawings, in which:
Figure 1 is a sectional view showing some components of the panel system of the invention;
Figure 2 is a sectional view of the panel system of the invention, partially assembled;
Figure 3 is a further sectional view analogous to figure 2;
Figure 4 shows, in section, the fully assembled panel joint;
Figure 5 is a longitudinal section through the panel joint of Figure 4; and
Figure 6 is a partial view of a modified panel joint in accordance with the invention.

As shown in the drawings, the system comprises a plurality of panels 10 which are held in position by means of channel members 30 and 32.

Each panel 10 is a composite sandwich which consists of a flat block 20 of insulating core material having, on each of its two faces, metal sheets 22.

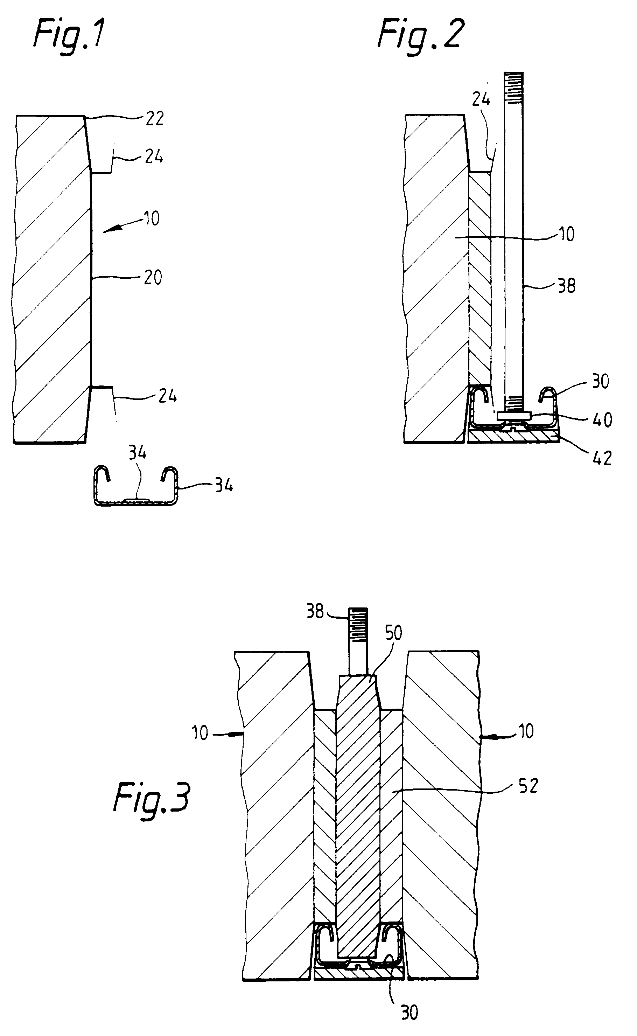

The sheet metal 22 on each face of the composite sandwich panel 10 is cold-formed around the edge corners of the core material 20 to provide both protection and integral edge stiffening, in a manner which is well-known. The sheet metal 22 is further shaped to form integral troughs 24 shown in figure 1 which extend longitudinally along the full length of the panel edges which are to be joined. The troughs 24 provide lateral stiffening to the edge of the panel and form part of the jointing system.

Two cold-formed, zinc coated steel channel members 30 and 32 form, continuously along the joint, other elements of the jointing system. The channel members 30 and 32 have flange stiffeners and are located in the adjoining troughs 24 of neighbouring panels 10 as shown in figures 2 to 4. The webs of the channels 30 and 32 are punch-countersunk at fixed centres 34,36 to take countersunk head screws. The channels 30 which are to be mounted on what will be the inaccessible face of the panel assembly are prepared with countersunk head screws 38 passed through the web of the channel members, with locking nuts 40 inside the channel 30 to hold the screws 38 in place. Steel screws are used so as to provide sustained strength during a fire. Use of stainless steel screws will reduce heat transfer through the insulation due to cold bridging, but scherardized screws may also be used. If insulated capping is required on the inaccessible face of the panel assembly, the capping 42 is also located on the channel prior to its installation, as shown in Figure 2.

The panel 10 last assembled is eased away from its support to position the channel member 30 on the inaccessible face of the partition, as shown in figure 2. The channel member 30 will then span between panel supports and one of the four troughs 24 will be engaged around the channel flange. Any required fixture of the channel member 30 to supporting rails should be made at this stage.

Once the channel member 30 has been fixed, a spacer 50 is located around each screw 38 and the remaining space between panels is packed with core material 52. The next panel 10 is then offered up to the channel member 30, and the second trough 24 is engaged as shown in figure 3. If the panels 10 are vertical, temporary support may need to be provided for them until completion of the joint assembly.

The channel member 32 at the accessible face of the assembly is then positioned with its flanges in the third and fourth troughs 24, and the projecting screw threads 38 are located in its punched holes 36. This is most easily achieved by locating one end screw 38 first and loosely fixing it with a nut 39. As the channel member 32 is rotated into position along its length, successive screws 38 can be located through their respective holes 36.

The nuts 39 are tightened to complete the structural part of the joint system. Excess screw thread can be cropped. The panels 10 are now firmly restrained both transversely because of the clamping action of the bolted channel members 30 and 32, and laterally because of the interlocking of the panel troughs 24 with the channel members 30 and 32.

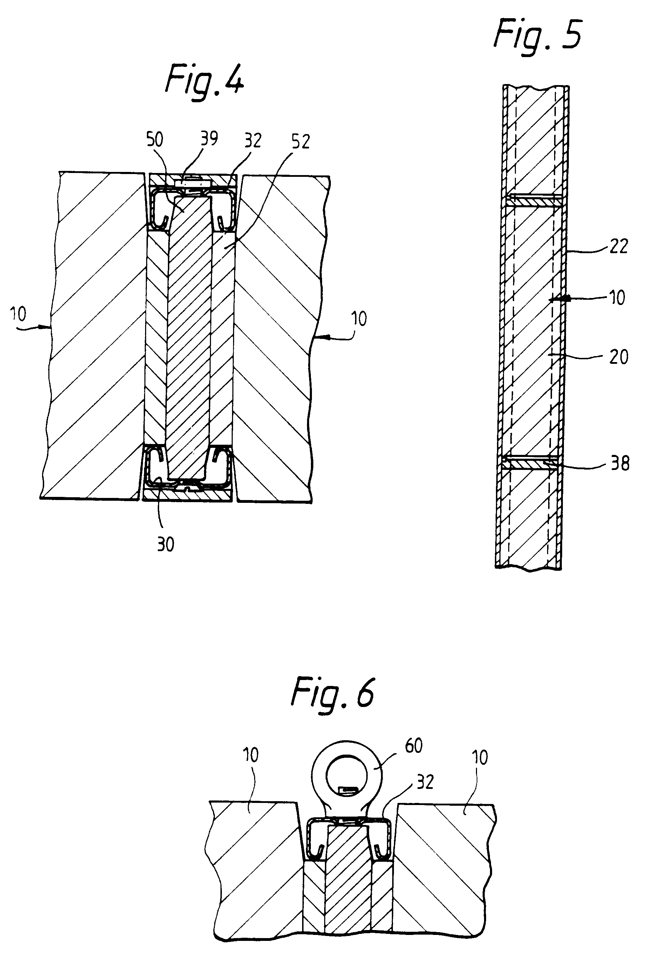

If the channel members 32 at the accessible face of the panels 10 requires an insulated capping 56, this is pushed over the channel 32, as shown in figure 4. The dimensions of the channel members 30 and 32 and troughs 24 are such that the assembled channels are recessed sufficiently for the inserted capping 56 to finish flush with the panel faces. Sealant will often be required in the four spaces between the capping 56 and panel edges, but this has been omitted from figure 4 for clarity.

If the panels 10 are to form a ceiling, it is unlikely that the top (accessible) face will require capping. Provision for the support of additional panels is made by using a female-threaded ring eye 60 (see figure 6) in place of the final assembly nut 56 described above.

This ring eye 60 and the associated screw form a tie through the panels which enables the supporting tensile forces to be transmitted through the jointing system to the remote face. These tensile forces cause delamination of soft-cored insulation panels if transmitted through the panels themselves.

## Claims

1. A panel system comprising a plurality of panel members (10) each of which comprises a panel body (20) disposed between and secured to a pair of planar facing members (22), and means for securing adjacent panel members together edge-to-edge, each of the facing members (22) being shaped so as to define a trough (24) extending along at least one edge portion of the panel body (20) and opening towards the face of the panel body (20) to which the facing member (22) is secured; and the means for securing the panel members (10) including first and second channel members (30,32) each having a pair of arms joined by means of a web, the arms of each channel member, in use, engaging one in each of the troughs (24) formed along the adjacent edge portions of a pair of neighbouring panel members (10); the system being characterised in that the troughs extend along confronting edges of the panel members and in that the means for securing adjacent panel members together further comprises fastening means engageable with the first and second channel members to fasten them together, the fastening means extending in between neighbouring panel members (10) to fasten together the channel members (30,32) on opposite sides thereof.

2. Apparatus according to claim 1 in which the troughs (24) are substantially rigid, extending along substantially the whole edge of each facing member (22), and serve to stiffen the edges of the panel members along which they extend.

3. Apparatus according to claim 1 or 2 in which the panel body (20) is relatively soft and there are secured on opposite faces thereof metallic sheets which form the facing members (22); the troughs being formed by suitably shaped portions of the said sheets, which extend beyond the panel body (20).

4. Apparatus according to claim 3 in which the panel body (20) is of thermally-insulating material.

5. Apparatus according to any preceding claim in which at least one channel member (30,32) is so shaped that, in use, the portion of the channel member joining the arms thereof extends substantially flush with the faces of the neighbouring panel members (10) the channel member serves to join.

6. Apparatus according to any of claims 1 to 4 further comprising an elongate capping member adapted to fit, in use, over one of the first and second channel members (30,32) so as to extend substantially flush with the faces of the neighbouring panel members (10) the channel member serves to join.

7. Apparatus according to any preceding claim, the apparatus comprising at least one insulating member which, in use, is located between the first and second channel members (30,32) in a gap defined by the adjacent edges of neighbouring panel members (10).

8. Apparatus according to any preceding claim in which the fastening means includes an elongate tie which, in use, passes through openings formed in the first and second channel members (30,32), at least one end portion of the said tie being threaded for engagement with a retaining nut.

## Patentansprüche

1. Paneelsystem, aufweisend mehrere Paneelteile (10), von denen jedes einen Plattenkörper (20) umfaßt, der zwischen einem Paar planarer Verblendteile (22) angeordnet ist und an diesem befestigt ist, und Einrichtungen zum Befestigen angrenzender Paneelteile, Kante an Kante aneinander, wobei jedes der Verblendteile (22) so geformt ist, daß es eine Mulde (24) definiert, die sich längs zumindest einem Kantenbereich des Plattenkörpers (20) erstreckt und sich zur Seitenfläche des Plattenkörpers (20) öffnet, an der das Verblendteil (22) befestigt ist; und wobei die Einrichtungen zum Befestigen der Paneelteile (10) ein erstes und zweites Nutteil (30,32) umfassen, von denen jedes ein Paar Arme aufweist, die mittels eines Stegs verbunden sind, wobei die Arme jede Nutteils im Einsatz jeweils einer in jede der Mulden (24) greift, die entlang der benachbarten Kantenbereiche eines Paares benachbarter Paneelteile (10) ausgebildet sind; wobei das System dadurch gekennzeichnet ist, daß die Mulden sich entlang gegenübergestellter Kanten der Paneelteile erstrecken und daß die Einrichtungen zum Befestigen aneinandergrenzenden Paneelteile aneinander ferner Befestigungseinrichtungen umfassen, die mit dem ersten und zweiten Nutteil in Eingriff bringbar sind, um diese aneinander zu befestigen, wobei die Befestigungseinrichtungen sich zwischen benachbarten Paneelteilen (10) zur Befestigung der Nutteile (30,32) an entgegengesetzten Seiten von jenen aneinander erstrecken.

2. System nach Anspruch 1, in welchem die Mulden (24) im wesentlichen starr sind, sich längs im wesentlichen der gesamten Kante jedes Verblendteil (22) erstrecken und dazu dienen, die Kanten der Paneelteile, längs der sie sich erstrecken, zu versteifen.

3. System nach Anspruch 1 oder 2, in welchem der Plattenkörper (20) relativ weich ist und auf entgegengesetzten Seitenflächen von diesem Metallbleche befestigt sind, die die Verblendteile (22) bilden; wobei die Mulden durch geeignet geformte Abschnitte dieser Bleche gebildet sind, die sich über den Plattenkörper (20) hinaus erstrecken.

4. System nach Anspruch 3, in welchem der Plattenkörper (20) aus wärmeisolierendem Material besteht.

5. System nach einem vorhergehenden Anspruch, in welchem zumindest ein Nutteil (30,32) so geformt ist, daß im Einsatz der Abschnitt des Nutteils, der dessen Arme verbindet, sich im wesentlichen bündig mit den Seitenflächen benachbarter Paneelteile (10) erstreckt, die mittels des Nutteils verbunden sind.

6. System nach einem der Ansprüche 1 bis 4, ferner aufweisend ein längliches Kappenteil, das dazu ausgelegt ist, im Einsatz über eines der ersten und zweiten Nutteile (30, 32) so gepaßt zu werden, um sich im wesentlichen bündig mit den Seitenflächen der benachbarten Paneelteile (10) des Nutteils, das zur Verbindung dient, zu erstrecken.

7. System nach einem vorhergehenden Anspruch, welches zumindest ein isolierendes Teil aufweist, das im Einsatz zwischen dem ersten und zweiten Nutteil (30,32) in einem Spalt angeordnet ist, der durch die aneinandergrenzenden Kanten der benachbarten Paneelteile (10) definiert ist.

8. System nach einem vorhergehenden Anspruch, in welchem die Befestigungseinrichtungen ein längliches Verbindungsstück umfassen, das im Einsatz durch Öffnungen tritt, die im ersten und zweiten Nutteil (30,32) ausgebildet sind, wobei zumindest ein Endabschnitt des Verbindungsstücks mit einem Gewinde versehen ist, zur Verbindung mit einer Befestigungsmutter.

## Revendications

1. Système de panneau comportant plusieurs éléments de panneau (10), constitués chacun d'un corps de panneau (20) agencé entre deux éléments (22) formant face plane et fixé à ceux-ci, et des moyens pour fixer ensemble des éléments de panneau adjacents, bord à bord, chacun des éléments (22) formant face étant mis en forme de manière à définir une goulotte (24) s'étendant le long d'au mois une partie de bord du corps de panneau (20) et ouvrant en direction de la face du corps de panneau (20) sur laquelle est fixé l'élément (22) formant face, et les moyens pour fixer les éléments de panneau (10) comportant un premier et un second éléments de canal (30, 32) ayant chacun une paire de bras reliés par l'intermédiaire d'une âme, les bras de chaque élément de canal, en utilisation, étant en prise un dans chacune des goulottes (24) formées le long des parties de bord adjacentes d'une paire d'éléments de panneau (10) voisins, le système étant caractérisé en ce que les goulottes s'étendent le long des bords en vis à vis des éléments de panneau et en ce que les moyens pour fixer ensemble les éléments de panneau adjacents comportent en outre des moyens de fixation pouvant être mis en prise avec les premier et second éléments de canal pour fixer ensemble ceux-ci, les moyens de fixation s étendant entre des éléments de panneau (10) voisins pour fixer ensemble les éléments de canal (30, 32) situés sur les côtés opposés de ceux-ci.

2. Appareil selon la revendication 1, dans lequel les goulottes (24) sont pratiquement rigides, en s'étendant pratiquement le long de la totalité du bord de chaque élément formant face (22), et servent à raidir les bords des éléments de panneau le long desquels elles s'étendent.

3. Appareil selon la revendication 1 ou 2, dans lequel le corps de panneau (20) est relativement doux et des feuilles métalliques sont fixées sur les faces opposées de celui-ci en formant les éléments formant face (22), les goulottes étant formées par des parties desdites feuilles mises en forme de manière adaptée, qui s'étendent au-delà du corps de panneau (20).

4. Appareil selon la revendication 3, dans lequel le corps de panneau (20) est constitué de matériau thermiquement isolant.

5. Appareil selon l'une quelconque des revendications précédentes, dans lequel au moins un élément de canal (30, 32) est formé de telle sorte qu'en utilisation la partie de l'élément de canal reliant les bras de celui-ci s'étende en affleurant pratiquement les faces des éléments de panneau voisins (10) que l'élément de canal sert à relier.

6. Appareil selon l'une quelconque des revendications 1 à 4, comportant en outre un élément formant capuchon allongé adapté pour être agencé, en utilisation, sur un des premier et second éléments de canal (30, 32) de manière a s'étendre en affleurant pratiquement les faces des éléments de panneau voisins (10) que l'élément de canal sert à relier.

7. Appareil selon l'une quelconque des revendications précédentes, comportant au moins un élément isolant qui, en utilisation, est situé entre le premier et le second éléments de canal (30, 32) dans un espace défini par les bords adjacents d'éléments de panneau voisins (10).

8. Appareil selon l'une quelconque des revendications précédentes, dans lequel les moyens de fixation comportent une tige allongée qui, en utilisation, passe à travers des ouvertures formées dans le premier et le second éléments de canal (30, 32), au moins une partie d'extrémité de ladite tige étant filetée pour venir en prise avec un écrou de retenue.
